# EUROPÄISCHE PATENTSCHRIFT

(11) **EP 0 499 880 B1**
(45) Veröffentlichungstag und Bekanntmachung des Hinweises auf die Patenterteilung: **29.04.1998**
(21) Anmeldenummer: 92101861.0
(22) Anmeldetag: 05.02.1992
(51) Int. Cl.: G11B 23/037, G11B 23/107

(54) **Wickelkern für Informationsträger**
Winding core for carrier of information
Moyeu d'enroulement pour support d'information

(30) Priorität: 22.02.1991 DE 4105604
(43) Veröffentlichungstag der Anmeldung: 26.08.1992
(73) Patentinhaber: EMTEC Magnetics GmbH, 67059 Ludwigshafen (DE)
(72) Erfinder: Liepold, August, W-8000 Muenchen 70 (DE); Scholtysik, Bernd, W-8000 Muenchen 80 (DE); Thiele, Hartmut, W-8000 Muenchen 71 (DE); Toral, Jose, W-8000 Muenchen 70 (DE)

(56) Entgegenhaltungen:
- EP-A- 0 375 322
- US-A- 4 280 670
- US-A- 4 385 734

## Beschreibung

Die Erfindung betrifft einen Wickelkern für aufgewickelte streifen- oder bandförmige Informationsträger, von Ringform, mit einem äußeren Umfang und einer darauf angeordneten Wickelfläche, wobei die Breite der äußeren Wickelfläche im wesentlichen der Breite des aufzuwickelnden Informationsträgers entspricht, der Wickelkern eine zentrische Bohrung besitzt, die den inneren Umfang bildet und an diesem inneren Umfang Mitnehmernuten aufweist, wobei zwischen dem äußeren und dem inneren Umfang des Wickelkerns elastisch verformbare, radial und in Umfangsrichtung verlaufende Zwischenelemente vorgesehen sind.

Informationsträger, beispielsweise Magnetbänder, werden nach der Herstellung der magnetischen Beschichtung auf einem bandförmigen flexiblen Schichtträger auf Gebrauchsbreite geschnitten und in einer Länge bis zu mehreren Tausend Metern auf Flanschspulen oder auf flanschlose Wickelkerne gespult. Dazu wird der Wickelkern mit seiner zentrischen Bohrung auf die Mitnehmerachse einer Wickelmaschine aufgesteckt und der Informationsträger wird mit hoher Geschwindigkeit und mit entsprechend angepaßtem Wickeldruck aufgewickelt. Im allgemeinen weisen die Wickelkerne zwischen der äußeren Wickelfläche und dem inneren Umfang Querschnittsflächeneinschnürungen zur Kosten- und Gewichtsersparnis auf, wobei zur Erhöhung der Stabilität in dieser Materialverdünnungszone radial verlaufende Versteifungsrippen vorgesehen sind. Ein Beispiel für einen derartigen Wickelkern ist in dem DE-U-77 22 919 genannt. Ein stapelbarer Wickelkern, bei dem die aufeinandergestapelten Bandwickel gegen Verdrehung und damit Beschädigung gesichert sind, ist aus der DE-A-24 48 853 bekannt.

Beim Aufwickeln der Informationsträger auf die genannten Wickelkerne sowie beim Umspulen können derart hohe Bandzüge auftreten, daß durch den Wickeldruck sich die Kernbohrung verengt, wodurch sich die Kerne nicht mehr auf die Antriebsachse der Wickelvorrichtung aufstecken beziehungsweise von dieser abziehen lassen. Um diesem Problem zu begegnen, ist es bekannt, die Wickelkerne aus glasfaserverstärktem Kunststoff herzustellen und gegebenenfalls auf die erwähnte Materialverdünnung zu verzichten; außerdem sind Wickelkerne aus Metall im Einsatz. Diese Lösungen haben jedoch aus Gewichts- und Kostengründen erhebliche Nachteile.

Aus dem bereits erwähnten Gebrauchsmuster DE-U-77 22 919 ist die Lehre bekannt, zur Vermeidung der Verengung der Kernbohrung einen radial verlaufenden Einfädelschlitz vorzusehen, der sich beim Wikkein verengt und dadurch die Wickelspannung auffängt. Aus der US-A-3 632 053 ist eine Flanschspule bekannt, deren Wickelkern die eingangs genannten gattungsmäßigen Eigenschaften hat und bei dem zusätzlich, um eine Übertragung der Kompression auf die Flansche zu vermeiden, zwischen Wickelkern und Flansch jeweils elastische Zwischenelemente vorgesehen sind. Aber auch dieser bekannte Wickelkern benötigt, wie aus der Beschreibung hervorgeht, glasfaserverstärktes Polystyrol oder Metall als Kernmaterial. In der Beschreibung der EP-A-0 375 322 des gleichen Anmelders ist außerdem zu lesen, daß trotz der elastischen Zwischenelemente immer noch der innere Durchmesser des Wickelkerns komprimiert wird. In der letztgenannten Schrift wird zur Vermeidung dieser Kompression vorgeschlagen, zwischen äußerem und innerem Ring eine Anzahl von schrägverlaufenden Rippen vorzusehen, welche eine Verdrehung des äußeren gegen den inneren Ring zur Folge haben. Aus der US-A-4 052 020 ist eine Spule für ein Computerband bekannt, bei der die äußere Wickelfläche des Kerns mit einer elastischen Oberfläche belegt ist, um auf diese Weise die beim Aufwickeln entstehende Spannung abzufangen.

Ausgehend vom obengenannten Stand der Technik war die Aufgabe zu lösen, einen Wickelkern der eingangs genannten gattungsmäßigen Art zu schaffen, der nicht die Nachteile des Standes der Technik hat, der außerdem aus Kunststoff aufgebaut ist und ohne Verstärkungszusätze, beispielsweise Glasfasern oder Glaskugeln, auskommen soll, weil dies Recyclingprobleme bereitet. Desweiteren war die Aufgabe zu lösen, daß beim Aufeinanderstapeln mehrerer Kerne mit Bandwickeln, sogenannter Pancakes, keine Tellerbildung des Bandwickels auftritt und daß ein solcher Pancakestapel beim Transport und bei der Lagerung keine Probleme bereitet.

Erfindungsgemäß wurde die Aufgabe gelöst mit einem Wickelkern gemäß einem der Ansprüche 1, 3, 4 oder 5. Weitere Einzelheiten der Erfindung sowie zweckmäßige Ausgestaltungen sind in den Unteransprüchen, den Zeichnungen und der Beschreibung enthalten.

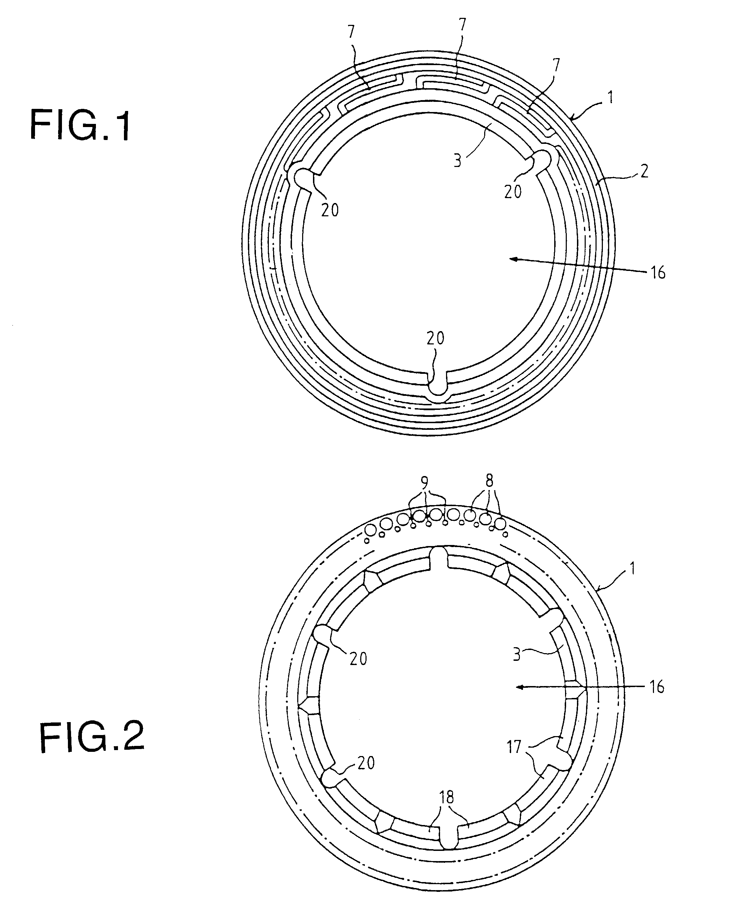

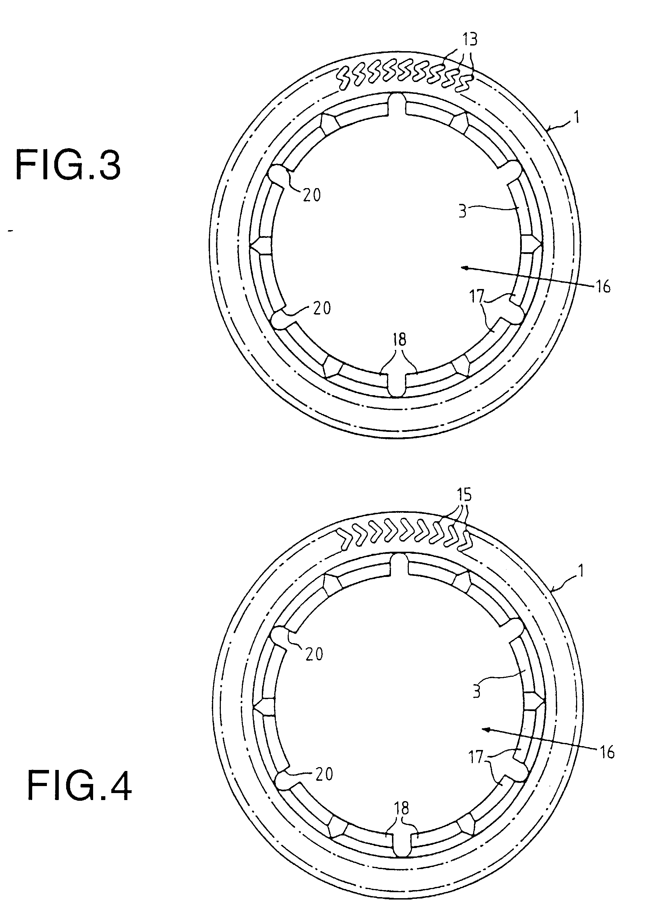

Die Erfindung wird nun anhand der Zeichnungen näher erläutert und zwar zeigen
- Figuren 1 bis 4: Draufsichten auf erfindungsgemäße Ausführungen des Wickelkerns mit elastischen Elementen.

Das wesentliche Merkmal der Ausführungsform gemäß Figur 1 besteht darin, daß der äußere Ring (2) des aus zwei konzentrischen Ringen bestehenden Wickelkerns eine Doppel-T-Struktur hat, und daß zwischen dem äußeren Ring (2) und dem inneren Ring (3) elastische Zwischenelemente (7) gleichmäßig in Umfangsrichtung verteilt angeordnet sind. Durch die Kombination von Doppel-T-Nut und elastischen Zwischenelementen wird in besonders effektiver Weise eine Übertragung der Kompression von dem äußeren auf den inneren Ring vermieden und gleichzeitig eine bedeutende Gewichtsersparnis erzielt, ohne das Kunststoffmaterial mit Glasfasern oder ähnlichen Zusätzen zu verstärken. Der innere Ring (3) besitzt bevorzugt an sich bekannte axiale Vorsprünge auf seinen beiden Seiten, welche in radialer Richtung gegeneinander versetzt sind, so daß beim Stapeln der Wickelkerne diese gegen Verschieben geschützt sind. Außerdem besitzt die zentrale Bohrung (16) des Wickelkerns ebenso aus dem Stand der Technik bekannte Mitnehmernuten (20).

Statt der oben genannten kreisringförmigen axialen Vorsprünge kann der innere Ring auch mit mehreren, am Innenumfang des Wickelkerns in Umfangsrichtung alternierend nach beiden Seiten sich erstreckenden Verformungen (17, 18) vorgesehen sein, welche beim Übereinanderstapeln mehrerer Wickelkerne jeweils formschlüssig ineinandergreifen und auf diese Weise ein gegenseitiges Verdrehen verhindern. Derartige Wickelkerne sind aus der bereits erwähnten DE-A-24 48 853 bekannt. Dadurch ist die Breite des inneren Ringes (3) bei den genannten bevorzugten Ausführungsformen größer als die Breite der Wickelfläche (1). Eine bevorzugte Ausführungsform stellt Figur 1 dar, bei der als besagte Zwischenelemente in radialer und in Umfangsrichtung sich erstreckende S-förmige Stege (7) gleichmäßig verteilt angeordnet sind.

Weitere, gleichfalls bevorzugte Ausführungsformen der vorliegenden Erfindung sind aus den Figuren 2, 3 und 4 zu erstehen. Diesen Ausführungsformen ist gemeinsam, daß der Kern nicht aus zwei konzentrischen Ringen besteht, sondern daß zwischen dem äußeren Umfang beziehungsweise der Wickelfläche (1) und dem inneren Umfang, beziehungsweise der inneren Bohrung (16), gleichmäßig über den Umfang verteilt auf beiden Seiten Durchbrüche vorgesehen sind, welche sowohl eine Materialersparnis bedeuten wie auch die geforderte Kompression des äußeren Umfangs aufgrund des Wickeldrucks zur Folge haben, ohne daß die Kompression auf den inneren Kern durchschlägt. Bewährt haben sich dabei folgende Formen: Aufgrund von Figur 2 sind die kreisförmigen Durchbrüche (8, 9) in einem oder mehreren konzentrischen Kreisen angeordnet, wobei die Durchbrüche unterschiedliche Größen haben können und gegeneinander versetzt angeordnet sein können.

Figur 3 zeigt Durchbrüche in Zickzack-Form (13).

Figur 4 stellt pfeilspitzenartige Durchbrüche (15) in Umfangsrichtung dar.

Auch bei diesen vorgenannten Ausführungsformen sind in der Nähe des inneren Umfanges beziehungsweise der Kernbohrung axiale Vorsprünge beziehungsweise Verformungen (17, 18) wie bereits oben näher beschrieben vorgesehen, um auf diese Weise ein Verschieben beziehungsweise ein Verdrehen der aufeinandergestapelten Wickelkerne zu vermeiden.

### Beispiel 1

Auf einem Wickelkern mit einem Außendurchmesser Da von 114 mm, einem Bohrungsinnendurchmesser Di von 77 mm und mit einer Breite von 15 mm, bestehend aus Polyamid ohne weitere Zusätze, der, wie in Figur 1 dargestellt, mit 12 S-förmigen elastischen Zwischenelementen und Doppel-T-Nut versehen ist, wurde ein Halbzoll-Videomagnetband mit einer Gesamtdicke von 19 µm und einer Länge von 5000 m auf einer konventionellen Wickelvorrichtung und einer Geschwindigkeit von 450 m/min aufgewickelt. Dabei wurden die Wickelparameter, das heißt Bandzug und Anpreßdruck der das Magnetband auf den Wickelkern pressenden Kontaktrolle so gewählt, daß auf den Wickelkern ein Wickeldruck von 20 bar wirkte.

### Vergleichsbeispiel

Ein handelsüblicher sogenannter NAB-Wickelkern, bestehend aus glasfaserverstärktem Polystyrol mit den gleichen Dimensionen wie im Beispiel 1, der jedoch zwischen Außendurchmesser und Innenbohrung eine Querschnittsverengung hat und beiderseits 9 radiale Rippen aufweist, wurde wie im Beispiel 1 mit dem gleichen Band unter den genau gleichen Bedingungen bewickelt.

Die nachfolgende Tabelle zeigt die Verringerung der Kerndurchmesser ΔDa, ΔDi, bei dem bewickelten Kern gemäß den erfindungsgemäßen Beispielen im Vergleich zu einem Wickelkern nach dem Stand der Technik.

**Tabelle**

| Wickelkern gemäß E-Modul Nmm⁻² | Beispiel 1 3000 | Vergleichsbeispiel 5500 |
|---|---|---|
| ΔDa | 0,3 mm | 0,5 mm |
| ΔDi | 0,06 mm | 0,4 mm |

## Patentansprüche

1. Wickelkern für aufgewickelte streifen- oder bandförmige Informationsträger von Ringform mit einem äußeren Umfang und einer darauf angeordneten Wickelfläche, wobei die Breite der äußeren Wickelfläche im wesentlichen der Breite des aufzuwickelnden Informationsträgers entspricht, der Wickelkern eine zentrische Bohrung (16) besitzt, die den inneren Umfang bildet und an diesem inneren Umfang Mitnehmernuten (20) aufweist, wobei zwischen dem äußeren und dem inneren Umfang des Wickelkerns elastisch verformbare, radial und in Umfangsrichtung verlaufende Zwischenelemente vorgesehen sind, dadurch gekennzeichnet, daß die radial und in Umfangsrichtung verlaufenden Zwischenelemente separate S-förmige Stege (7) sind, wobei insbesondere ein in Umfangsrichtung verlaufendes Teil an jedem Ende durch jeweils ein in Radialrichtung verlaufendes Teil mit der Ringform des Wickelkerns verbunden ist, so daß eine relative Bewegung des äußeren Umfangs gegenüber dem inneren Umfang der Ringform des Wickelkerns in Umfangsrichtung verhindert ist.

2. Wickelkern nach Anspruch 1, dadurch gekennzeichnet, daß derselbe aus Kunststoff besteht und mit dem darauf aufgewickelten Informationsträger ein Kompressionsverhältnis des komprimierten Innenumfangs (ΔDi) zum komprimierten Außenumfang (ΔDa) von 1:5 aufweist.

3. Wickelkern für aufgewickelte streifen- oder bandförmige Informationsträger von Ringform mit einem äußeren Umfang und einer darauf angeordneten Wickelfläche, wobei die Breite der äußeren Wickelfläche im wesentlichen der Breite des aufzuwickelnden Informationsträgers entspricht, der Wickelkern eine zentrische Bohrung (16) besitzt, die den inneren Umfang bildet und an diesem inneren Umfang Mitnehmernuten (20) aufweist, wobei zwischen dem äußeren und dem inneren Umfang des Wickelkerns elastisch verformbare, radial und in Umfangsrichtung verlaufende Zwischenelemente vorgesehen sind, dadurch gekennzeichnet, daß die radial und in Umfangsrichtung verlaufenden Zwischenelemente Stege zwischen kreisförmigen und unterschiedlich großen Durchbrüchen (8, 9) sind, wobei die Kreisform-Durchbrüche (8, 9) in Form eines oder mehrerer konzentrisch verlaufender Ringe angeordnet sind, so daß eine relative Bewegung des äußeren Umfangs gegenüber dem inneren Umfang der Ringform des Wickelkerns in Umfangsrichtung verhindert ist.

4. Wickelkern für aufgewickelte streifen- oder bandförmige Informationsträger von Ringform mit einem äußeren Umfang und einer darauf angeordneten Wickel flache, wobei die Breite der äußeren Wickelfläche im wesentlichen der Breite des aufzuwickelnden Informationsträgers entspricht, der Wickelkern eine zentrische Bohrung (16) besitzt, die den inneren Umfang bildet und an diesem inneren Umfang Mitnehmernuten (20) aufweist, wobei zwischen dem äußeren und dem inneren Umfang des Wickelkerns elastisch verformbare, radial und in Umfangsrichtung verlaufende Zwischenelemente vorgesehen sind, dadurch gekennzeichnet, daß die radial und in Umfangsrichtung verlaufenden Zwischenelemente als Stege zwischen zickzackförmigen Durchbrüchen ausgeformt sind, wobei die zickzackförmigen Durchbrüche auf Radien zwischen dem inneren und dem äußeren Umfang der Ringform des Wickelkerns angeordnet sind, so daß eine relative Bewegung des äußeren Umfangs gegenüber dem inneren Umfang der Ringform des Wickelkerns in Umfangsrichtung verhindert ist.

5. Wickelkern für aufgewickelte streifen- oder bandförmige Informationsträger von Ringform mit einem äußeren Umfang und einer darauf angeordneten Wickelfläche, wobei die Breite der äußeren Wickelfläche im wesentlichen der Breite des aufzuwickelnden Informationsträgers entspricht, der Wickelkern eine zentrische Bohrung (16) besitzt, die den inneren Umfang bildet und an diesem inneren Umfang Mitnehmernuten (20) aufweist, wobei zwischen dem äußeren und dem inneren Umfang des Wickelkerns elastisch verformbare, radial und in Umfangsrichtung verlaufende Zwischenelemente vorgesehen sind, dadurch gekennzeichnet, daß die radial und in Umfangsrichtung verlaufenden Zwischenelemente als Stege zwischen pfeilspitzenartigen Durchbrüchen ausgeformt sind, die auf einem zwischen dem inneren und äußeren Umfang liegenden Kreisring gleichgerichtet angeordnet sind, so daß eine relative Bewegung des äußeren gegenüber dem inneren Umfang der Ringform des Wickelkerns in Umfangsrichtung verhindert ist.

6. Wickelkern nach Anspruch 1 oder 2, dadurch gekennzeichnet, daß zwischen dem äußeren und inneren Umfang der Ringform ein innerer und äußerer Ring (3 bzw. 2) vorgesehen sind.

7. Wickelkern nach Anspruch 6, dadurch gekennzeichnet, daß der äußere Ring ein Doppel-T-Profil besitzt.

8. Wickelkern nach einem der Ansprüche 1 bis 7, dadurch gekennzeichnet, daß als Material ein thermoplastischer Kunststoff, wie PVC oder Polyamid, ohne Verstärkungsmaterialien, wie Glasfaser oder Glaskugeln, verwendet ist.

9. Wickelkern nach einem der Ansprüche 1 bis 8, dadurch gekennzeichnet, daß benachbart zum inneren Umfang der Ringform des Wickelkerns auf beiden Seiten axiale Vorsprünge (17, 18) zum Stapeln vorgesehen sind.

## Claims

1. A hub for wound-up information media in strip or tape form in the form of a ring with an outer circumference and a winding area arranged thereupon, the width of the outer winding area substantially corresponding to the width of the information medium to be wound up, the hub having a central bore (16), which forms the inner circumference and has driving grooves (20) on this inner circumference, elastically deformable intermediate elements, running radially and in the circumferential direction, being provided between the outer circumference and the inner circumference of the hub, wherein the intermediate elements running radially and in the circumferential direction are separate S-shaped webs (7), it being provided in particular that a part running in the circumferential direction is connected at each end to the ring form of the hub by in each case a part running in the radial direction, so that a relative movement of the outer circumference with respect to the inner circumference of the ring form of the hub in the circumferential direction is prevented.

2. A hub as claimed in claim 1, wherein the same consists of plastic and, with the information medium wound up on it, has a compression ratio of the compressed inner circumference (ΔDi) to the compressed outer circumference (ΔDa) of 1:5.

3. A hub for wound-up information media in strip or tape form in the form of a ring with an outer circumference and a winding area arranged thereupon, the width of the outer winding area substantially corresponding to the width of the information medium to be wound up, the hub having a central bore (16), which forms the inner circumference and has driving grooves (20) on this inner circumference, elastically deformable intermediate elements, running radially and in the circumferential direction, being provided between the outer circumference and the inner circumference of the hub, wherein the intermediate elements running radially and in the circumferential direction are webs between circular openings (8, 9) of different sizes, the circular openings (8, 9) being arranged in the form of one or more concentrically running rings, so that a relative movement of the outer circumference with respect to the inner circumference of the ring form of the hub in the circumferential direction is prevented.

4. A hub for wound-up information media in strip or tape form in the form of a ring with an outer circumference and a winding area arranged thereupon, the width of the outer winding area substantially corresponding to the width of the information medium to be wound up, the hub having a central bore (16), which forms the inner circumference and has driving grooves (20) on this inner circumference, elastically deformable intermediate elements, running radially and in the circumferential direction, being provided between the outer circumference and the inner circumference of the hub, wherein the intermediate elements running radially and in the circumferential direction are shaped as webs between zig-zag-shaped openings, the zig-zag-shaped openings being arranged on radii between the inner circumference and the outer circumference of the ring form of the hub, so that a relative movement of the outer circumference with respect to the inner circumference of the ring form of the hub in the circumferential direction is prevented.

5. A hub for wound-up information media in strip or tape form in the form of a ring with an outer circumference and a winding area arranged thereupon, the width of the outer winding area substantially corresponding to the width of the information medium to be wound up, the hub having a central bore (16), which forms the inner circumference and has driving grooves (20) on this inner circumference, elastically deformable intermediate elements, running radially and in the circumferential direction, being provided between the outer circumference and the inner circumference of the hub, wherein the intermediate elements running radially and in the circumferential direction are shaped as webs between chevronlike openings which are arranged in a uni-directed manner on a circular ring lying between the inner circumference and the outer circumference, so that a relative movement of the outer circumference with respect to the inner circumference of the ring form of the hub in the circumferential direction is prevented.

6. A hub as claimed in claim 1 or 2, wherein an inner ring (3) and an outer ring (2) are provided between the outer circumference and the inner circumference of the ring form.

7. A hub as claimed in claim 6, wherein the outer ring has a double-T profile.

8. A hub as claimed in one of claims 1 to 7, wherein a thermoplastic, such as PVC or polyamide, without reinforcing materials, such as glass fiber or glass beads, is used as the material.

9. A hub as claimed in one of claims 1 to 8, wherein axial projections (17, 18) for stacking are provided alongside the inner circumference of the ring form of the hub on both sides.

## Revendications

1. Noyau d'enroulement de forme annulaire pour supports d'information enroulés se présentant sous forme de bandes ou de ruban, avec une périphérie extérieure et une surface d'enroulement disposée dessus, la largeur de la surface d'enroulement extérieure correspondant sensiblement à la largeur du support d'information à enrouler, le noyau d'enroulement présentant un perçage central (16) qui forme la périphérie intérieure et présente sur cette périphérie intérieure des rainures d'entraînement (20), des éléments intermédiaires déformables élastiquement, s'étendant radialement et en direction périphérique, étant prévus entre la périphérie extérieure et la périphérie intérieure du noyau d'enroulement, caractérisé par le fait que les éléments intermédiaires s'étendant radialement et en direction périphérique sont des barrettes séparées (7) en forme de S, en particulier une partie s'étendant en direction périphérique étant reliée à la forme annulaire des noyaux d'enroulement à chaque extrémité, par chaque fois une partie s'étendant en direction radiale, si bien que tout déplacement relatif entre la périphérie extérieure et la périphérie intérieure de la forme annulaire du noyau d'enroulement est empêché dans la direction périphérique.

2. Noyau d'enroulement selon la revendication 1, caractérisé par le fait que celui-ci est en matière plastique et présente, avec le support d'information enroulé sur lui, un rapport de compression, entre la périphérie intérieure comprimée (ΔDi) et la périphérie extérieure comprimée (ΔDa), de 1:5.

3. Noyau d'enroulement de forme annulaire pour supports d'information enroulés se présentant sous forme de bandes ou de ruban, avec une périphérie extérieure et une surface d'enroulement disposée dessus, la largeur de la surface d'enroulement extérieure correspondant sensiblement à la largeur du support d'information à enrouler, le noyau d'enroulement présentant un perçage central (16) qui forme la périphérie intérieure et présente sur cette périphérie intérieure des rainures d'entraînement (20), des éléments intermédiaires déformables élastiquement, s'étendant radialement et en direction périphérique, étant prévus entre la périphérie extérieure et la périphérie intérieure du noyau d'enroulement, caractérisé par le fait que les éléments intermédiaires s'étendant radialement et en direction périphérique sont des barrettes prévues entre des passages (8, 9) à forme circulaire et de tailles différentes, les passages à forme circulaire (8, 9) étant disposés sous la forme d'un ou plusieurs anneaux s'étendant concentriquement, si bien que tout déplacement relatif entre la périphérie extérieure et la périphérie intérieure de la forme annulaire du noyau d'enroulement est empêché dans la direction périphérique.

4. Noyau d'enroulement de forme annulaire pour supports d'information enroulés se présentant sous forme de bandes ou de ruban, avec une périphérie extérieure et une surface d'enroulement disposée dessus, la largeur de la surface d'enroulement extérieure correspondant sensiblement à la largeur du support d'information à enrouler, le noyau d'enroulement présentant un perçage central (16) qui forme la périphérie intérieure et présente sur sa périphérie intérieure des rainures d'entraînement (20), des éléments intermédiaires déformables élastiquement, s'étendant radialement et en direction périphérique, étant prévus entre la périphérie extérieure et la périphérie intérieure du noyau d'enroulement, caractérisé par le fait que les éléments intermédiaires s'étendant radialement et en direction périphérique sont conformés sous forme de barrettes (7) prévues entre des passages en forme de zig-zag, les passages en forme de zig-zag étant disposés sur des rayons entre la périphérie intérieure et la périphérie extérieure de la forme annulaire du noyau d'enroulement, si bien que tout déplacement relatif entre la périphérie extérieure par rapport à la périphérie intérieure de la forme annulaire du noyau d'enroulement est empêché en direction périphérique.

5. Noyau d'enroulement de forme annulaire pour supports d'information enroulés se présentant sous forme de bandes ou de ruban, ayant une forme annulaire, avec une périphérie extérieure et une surface d'enroulement disposée dessus, la largeur de la surface d'enroulement extérieure correspondant sensiblement à la largeur du support d'information à enrouler, le noyau d'enroulement présentant un perçage central (16) qui forme la périphérie intérieure et présente sur sa périphérie intérieure des rainures d'entraînement (20), des éléments intermédiaires déformables élastiquement, s'étendant radialement et en direction périphérique, étant prévus entre la périphérie extérieure et la périphérie intérieure du noyau d'enroulement, caractérisé par le fait que les éléments intermédiaires s'étendant radialement et en direction périphérique sont conformés sous forme de barrettes prévues entre des passages en forme de pointes de flèche, qui sont orientés dans le même sens sur un anneau de cercle situé entre la périphérie intérieure et la périphérie extérieure, si bien que tout déplacement relatif entre la périphérie extérieure par rapport à la périphérie intérieure de la forme annulaire du noyau d'enroulement est empêché en direction périphérique.

6. Noyau d'enroulement selon la revendication 1 ou la revendication 2, caractérisé par le fait qu'entre la périphérie extérieure et la périphérie intérieure de la forme annulaire sont prévus un anneau intérieur et un anneau extérieur (3, respectivement 2).

7. Noyau d'enroulement selon la revendication 6, caractérisé par le fait que l'anneau extérieur a un profil en double T.

8. Noyau d'enroulement selon l'une des revendications 1 à 7, caractérisé par le fait qu'est utilisée comme matériau une matière synthétique thermoplastique, telle que du PVC ou du polyamide, sans matériaux de renforcement, tels que des fibres de verre ou des billes de verre.

9. Noyau d'enroulement selon l'une des revendications 1 à 8, caractérisé par le fait qu'au voisinage de la périphérie intérieure de la forme annulaire du noyau d'enroulement sont prévues, des deux côtés, des saillies axiales (17, 18) pour constituer des empilements.
